# EUROPÄISCHE PATENTSCHRIFT

(11) **EP 2 002 146 B1**
(45) Veröffentlichungstag und Bekanntmachung des Hinweises auf die Patenterteilung: **09.06.2010**
(21) Anmeldenummer: 07723690.9
(22) Anmeldetag: 28.03.2007
(51) Int. Cl.: F16H 3/00, F16H 3/091, F16H 3/093, F16H 37/04

(54) **LASTSCHALTBARES GETRIEBE FÜR EIN NUTZFAHRZEUG**
POWER-SHIFT TRANSMISSION FOR A COMMERCIAL VEHICLE
TRANSMISSION A CHANGEMENT DE RAPPORTS SOUS CHARGE POUR UN VEHICULE UTILITAIRE

(30) Priorität: 04.04.2006 DE 102006015661
(43) Veröffentlichungstag der Anmeldung: 17.12.2008
(73) Patentinhaber: Daimler AG, 70327 Stuttgart (DE)
(72) Erfinder: CARSTEN, Gitt, 70327 Stuttgart (DE)
(74) Vertreter: JENSEN & SON
(86) Internationale Anmeldenummer: PCT/EP2007/002744
(87) Internationale Veröffentlichungsnummer: WO 2007/115687

(56) Entgegenhaltungen:
- WO-A-00/39484
- WO-A-01/88409

## Beschreibung

Die Erfindung betrifft ein lastschaltbares Getriebe für ein Nutzfahrzeug mit einer Splitgruppe, einer Hauptgruppe und einer Rangegruppe.

WO 00/39484 offenbart ein sequentiell und zugkraftunterbrechungsfrei schaltbares Getriebe für ein Kraftfahrzeug, insbesondere einen Personenkraftwagen, mit sechs Vorwärtsgängen. Um eine große Variabilität hinsichtlich zugkraftunterbrechungsfreier Schaltvorgänge, auch bei mehrfachen Hoch- oder Rückschaltungen, zu ermöglichen, sind gleiche Getriebegänge in dem Getriebe für unterschiedliche Leistungsflüsse über unterschiedliche Schaltelemente und von unterschiedlichen einer Doppelkupplung zugeordneten Eingangswellen möglich. Hierzu ist ein als Losrad auf einer Eingangswelle gelagertes Zahnrad einer Eingangskonstanten über beidseitig des Losrades wirkende Schaltelemente wahlweise mit jeder Eingangswelle koppelbar, so dass dieses Losrad von beiden Kupplungen und beiden Eingangswellen antreibbar ist. Das Getriebe besitzt weiterhin zwei Vorgelegewellen, die jeweils von einer Einganskonstanten angetrieben werden, wobei eine der Vorgelegewellen als Hohlwelle ausgebildet ist, die koaxial zu der anderen Vorgelegewelle angeordnet ist und radial innen liegend gegenüber der anderen Vorgelegewelle gelagert ist. Von den Vorgelegewellen ist ein Abtrieb auf eine Abtriebswelle möglich in drei jeweils Vorwärtsgängen zugeordneten Zahnradebenen sowie einer einem Rückwärtsgang zugeordneten Zahnradebene unter Zwischenschaltung weiterer Schaltelemente. Das Getriebe verfügt über einen Direktgang, für den eine Eingangswelle ohne Zwischenschaltung wälzender Zahnradverbindungen mit der Abtriebswelle des Getriebes koppelbar ist.

Aus der nicht vorveröffentlichten Anmeldung der Anmelderin mit dem internen Aktenzeichen P807553/DE/1 und dem Titel "Lastschaltbares Gruppengetriebe" ist ein Getriebe für ein Nutzfahrzeug bekannt, welches eine Splitgruppe, eine Hauptgruppe und eine Rangegruppe aufweist und 12, 16 oder 20 Vorwärtsgänge besitzt. Auch zur Gewährleistung einer Leistungsverzweigung in einzelnen Getriebegängen treiben die mit der Doppelkupplung verbundenen Eingangswellen jeweils über eine Eingangskonstante zwei koaxial zueinander angeordnete Vorgelegewellen an.

Aus der nicht vorveröffentlichten Anmeldung der Anmelderin mit dem internen Aktenzeichen der Anmelderin P807447/DE/1 mit dem Titel "Automatisiertes Lastschaltgetriebe" ist ein Getriebe für ein Nutzfahrzeug bekannt mit einer Splitgruppe, einer Hauptgruppe und einer Rangegruppe, wobei in diesem Fall mit Ausnahme eines eventuell vorhandenen Direktgangs die Leistungspfade in sämtlichen Vorwärts-Getriebegängen über dieselbe Vorgelegewelle verlaufen. Im Umgebungsbereich eines Direktgangs sind bis zu vier sequentiell lastschaltbare Getriebegänge möglich. Die Eingangskonstanten sind selektiv jeweils mit einer zugeordneten Eingangswelle und Kupplung der Doppelkupplung verbindbar. Mehrfach Hoch- und Rückschaltungen sowie eine Übergabe eines Antriebsmomentes von einer Kupplung auf eine andere Kupplung für denselben Getriebegang sind in dieser Druckschrift nicht angesprochen.

Weitere Getriebe, bei denen Eingangskonstanten jeweils einer einzelnen Kupplung einer Doppelkupplung zugeordnet sind und je nach beaufschlagter Kupplung der Leistungspfad über eine von zwei koaxialen Vorgelegewellen verläuft, sind aus DE 4330170 C2, DE 10338355 A1 sowie US 6,460,425 B1 bekannt. Weiterer Stand der Technik zu Getrieben mit Doppelkupplungen bilden beispielsweise DE 10102028 A1 oder DE 3546454 C2.

Der vorliegenden Erfindung liegt die Aufgabe zugrunde, ein für ein Nutzfahrzeug einsetzbares lastschaltbares Getriebe vorzuschlagen, welches hinsichtlich des konstruktiven Aufwands, insbesondere der einzusetzenden Schaltelemente, der Lagerungen und des Bauraumes, der sequentiellen Lastschaltbarkeit, bei gleichzeitiger Ermöglichung von Mehrfachhochschaltungen oder Mehrfachrückschaltungen ohne Zugkraftunterbrechung verbessert ist.

Die der Erfindung zugrunde liegende Aufgabe wird gelöst durch ein lastschaltbares Getriebe gemäß den Merkmalen des Anspruchs 1.

Ein derartiges Getriebe zeichnet sich zunächst durch Hintereinanderschaltung einer Splitgruppe, einer Hauptgruppe und einer Rangegruppe aus, wodurch eine hohe Variabilität der möglichen Getriebegänge unter vertretbaren Bauaufwand gegeben ist, über die auch schwere Nutzfahrzeuge mit variierenden Fahrbedingungen feinstufig antreibbar sind.

Weiterhin sind selektiv über die Doppelkupplung antreibbare Eingangswellen koaxial zu einer Abtriebswelle des Getriebes angeordnet, wodurch sich eine gute Integration in einen Antriebsstrang eines Nutzfahrzeuges ergibt.

Die vorliegende Erfindung baut auf dem Grundgedanken gemäß WO 00/39484 hinsichtlich einer Ermöglichung einer Verbindung eines Losrades einer Eingangskonstanten mit beiden Eingangswellen auf. Bei einem derartigen Losrad kann es sich sowohl um ein gegenüber den Eingangswellen drehbar gelagertes Losrad, also ein Antriebsrad der Eingangskonstanten, als auch um ein der Vorgelegewelle zugeordnetes Losrad, also ein ausgangsseitiges Zahnrad der Eingangskonstanten, handeln. Die Schaffung einer Möglichkeit einer Verbindung des Losrades mit beiden Eingangswellen und damit beiden Kupplungen führt für eine vorgegebene Zahl von Zahnradpaaren und Zahnebenen zur Gewährleistung vieler unterschiedlicher Lastschaltmöglichkeiten, auch für Doppelhoch- und Doppelrückschaltungen unter Last, ohne dass zusätzliche Zahnradpaare vorzusehen sind. Weiterhin kann auf eine derartige Weise die selektiv antreibbare Eingangskonstante konstruktiv einfach, Platz sparend und mit einem hohen Wirkungsgrad bzw. mit geringen Verlusten durch Zahneingriffe mit den beiden Eingangswellen und Kupplungen in Wirkverbindung gebracht werden.

Weiterhin kann durch die selektive Verbindbarkeit des Losrades ermöglicht werden, dass ein Getriebegang und ein Wechsel in diesen wahlweise über eine der beiden Kupplungen erfolgen kann. Somit kann erfindungsgemäß beispielsweise mit einer geeigneten Steuerung einer Überlastung einer Kupplung, beispielsweise während eines Anfahrvorgangs, einem unterschiedlichen Verschleiß der Kupplungen und etwaigen Beeinträchtigungen einer Kupplung, Rechnung getragen werden. Dies kann auch zu einer Verlängerung von Wartungsintervallen führen.

Erfindungsgemäß ist eine der beiden Eingangswellen über ein Schaltelement drehfest mit einer Hauptwelle der Hauptgruppe verbindbar, so dass ein direkter Durchtrieb durch Splitgruppe und Hauptgruppe mit einem optimalen Wirkungsgrad erfolgt. Durch Nachschaltung einer Rangegruppe kann ein derart vorteilhafter Betrieb für eine Mehrzahl unterschiedlicher Getriebegänge je nach Schaltzustand der Rangegruppe genutzt werden. Hierbei ist von besonderem Vorteil, dass die Rangegruppe ebenfalls einen Direktgang aufweist, in dem in den Leistungsfluss in der Rangegruppe keine wälzenden Zahnräder zwischengeschaltet sind. Damit besitzt das Gesamtgetriebe Getriebegänge mit gutem Wirkungsgrad, in denen ein direkter Durchtrieb durch die Splitgruppe und Hauptgruppe erfolgt, sowie einen Getriebegang mit weiter verbessertem Wirkungsgrad, in dem ein Direktgang durch Splitgruppe, Hauptgruppe und Rangegruppe gegeben ist.

Während gemäß WO 00/39484 ein selektiver Antrieb der koaxialen Vorgelegewellen jeweils über eine Eingangskonstante erfolgt, was infolge der mehreren Vorgelegewellen, der Lagerung einer als Hohlwelle ausgebildeten Vorgelegewelle auf der anderen Vorgelegewelle und der Mehrzahl der erforderlichen Schaltelemente einen erhöhten Einbauraum erfordert, verlaufen erfindungsgemäß (bis auf den Direktgang) sämtliche Getriebegänge über ein und dieselbe Vorgelegewelle. Hierdurch soll nicht ausgeschlossen werden, dass eine Leistungsteilung derart erfolgt, dass zwei parallele Vorgelegewellen mit vergleichbaren Leistungsflüssen vorgesehen sind, die aber beide für sämtliche Vorwärtsgänge (bis auf den Direktgang) in den Leistungsfluss zwischengeschaltet sind.

Weitere Vorteile hinsichtlich des Bauaufwands ergeben sich infolge der erfindungsgemäß geschaffenen Möglichkeit, dass die der oder einer Vorgelegewelle zugeordneten Zahnräder sämtlich als Festräder ausgebildet sein können, wodurch Schaltelemente und zusätzlicher Bauraum im Bereich der Vorgelegewelle eingespart werden können. Weiterhin ist unter Umständen eine Betätigung der Schaltelemente sämtlich im Bereich der gemeinsamen Achse der Eingangswellen und der Abtriebswelle möglich, wodurch kompakte, "zentralisierte" Aktuatoren und elektrische Steuereinheiten für diese möglich sind.

Trotz eines Verzichts auf die Ausbildung des Getriebes mit zwei Teilgetrieben gemäß P807553/DE/1 können die in dieser nicht vorveröffentlichten Anmeldung beschriebenen Vorteile erzielt werden, insbesondere Doppelrück- oder Doppelhochschaltungen ohne Unterbrechung der Zugkraft sowie auch Dreifachrück- oder Dreifachhochschaltungen realisiert werden. Andererseits ist gemäß P807447/DE/1 ein Verlauf sämtlicher Getriebegänge ausschließlich eines Direktgangs über eine einzige Vorgelegewelle bekannt - für diese bekannte Ausgestaltung ist jedoch nicht der Antrieb einer Eingangskonstanten von beiden Kupplungen und Eingangswellen möglich, wodurch sich eine verringerte Variabilität insbesondere hinsichtlich zugkraftunterbrechungsfreier Mehrfachhochschaltungen und Mehrfachrückschaltungen ergibt.

In besonders vorteilhafter Weise können sämtliche Schaltelemente bzw. -muffen so angeordnet sein, dass diese ausschließlich koaxial zu den Eingangswellen angeordnet sind. In diesem Fall kann die Aktuatorik zur Betätigung der Schaltelemente besonders kompakt und kostengünstig ausgeführt sein. In diesem Fall kann ausschließlich eine Vorgelegewelle vorgesehen sein, die dann ausschließlich Festräder trägt. Eine derartige Verwendung einer einzigen Vorgelegewelle hat Kosten-, Gewichts- und Bauraumvorteile, die den Nachteil einer hohen Wellendurchbiegung und hohen Lagerkräften entgegenstehen, da die Verzahnungskräfte an den Kraft übertragenden Verzahnungen bestrebt sind, die beiden parallel beabstandeten Wellen voneinander weg zu drücken. Eine derartige hohe Wellendurchbiegung kann beispielsweise mittels Einsatzes einer Wälzlagerung gemäß DE 10332210 A1 verhindert werden. Eine weitere vorteilhafte Möglichkeit zur Verhinderung hoher Wellendurchbiegungen und Lagerbelastungen ist die Verwendung von zwei zumindest teilweise gleich ausgeführten Vorgelegewellen, deren Kräfte sich gegenseitig aufheben können. In einem derartigen Fall können die beiden Vorgelegewellen ebenfalls ausschließlich mit Festrädern versehen sein und/oder keine Schaltmuffen tragen.

Gemäß einem weiteren Vorschlag der Erfindung sind die eingangsseitigen Zahnräder der Eingangskonstanten nicht lediglich zur Übergabe der Antriebsbewegung auf die Vorgelegewelle genutzt. Vielmehr wird über eine erste Eingangskonstante das Antriebsmoment zunächst von einer Eingangswelle zu der Vorgelegewelle übertragen. In dieser ersten Eingangskonstanten ist das selektiv mit beiden Eingangswellen verbindbare Losrad wirksam. Über eine weitere "Eingangskonstante" wird in "umgekehrtem" Leistungsfluss die Leistung von der Vorgelegewelle zu der anderen Eingangswelle zurückgeführt, die über ein Schaltelement drehfest mit der Hauptwelle des Hauptgetriebes verbunden ist. Für diesen Getriebegang sind damit Zahnradpaare der Hauptgruppe nicht genutzt.

Eine besonders kompakte Ausgestaltung des Getriebes ergibt sich in dem Fall, wenn die Verbindung zwischen Eingangswelle (oder zugeordnetem Zahnrad für die Leistungsrückführung) und der Hauptwelle der Hauptgruppe über das Schaltelement hergestellt wird, welches auch in dem Direktgang eine Verbindung der Eingangswelle mit der Hauptwelle herbeiführt.

Die in den nicht vorveröffentlichten Anmeldungen P807447 und P807553 beschriebenen Vorteile können erfindungsgemäß ebenfalls genutzt werden, wenn Gruppen von Getriebegängen sequentiell schaltbar sind.

Ein verbesserter Komfort und eine verbesserte Leistungscharakteristik ergeben sich, wenn zugkraftunterbrechungsfreie Doppelhoch- oder Doppelrückschaltungen oder Mehrfachhochschaltungen oder Mehrfachrückschaltungen möglich sind, über die der Schaltzustand des Getriebes noch individueller an die jeweiligen Fahrbedingungen anpassbar sind.

Während üblicherweise benachbarte Gänge jeweils über unterschiedliche Kupplungen aktivierbar und deaktivierbar sind, was zur Folge hat, dass um eine Zahl 2 verschiedene Getriebegänge über dieselbe Kupplungen aktiviert werden, ist durch die selektive Verbindbarkeit des Losrades mit beiden Kupplungen die Möglichkeit gegeben, bei einer Doppelhoch- oder Doppelrückschaltung beide Kupplungen zu verwenden, wodurch diese erst zugkraftunterbrechungsfrei gestaltet werden können. Soll nach einer derartigen Doppelhoch- oder Doppelrückschaltung ein sequentieller Schaltvorgang zu einem benachbarten Getriebegang erfolgen, kann sich das Problem ergeben, dass dieser benachbarte Getriebegang über die für die Doppelhoch- oder Doppelrückschaltung genutzte Kupplung erfolgen muss. Hierzu schlägt die Erfindung vor, dass in einem derartigen Fall eine Übergabe von einer Kupplung der Doppelkupplung und der hiermit verbundenen Eingangswelle auf die andere Kupplung der Doppelkupplung und die hiermit verbundene Eingangswelle zur Vorbereitung der sequentiellen Schaltung erfolgt. Somit kann sowohl die Doppelhoch- oder Doppelrückschaltung als auch eine anschließende sequentielle Schaltung zugkraftunterbrechungsfrei gestaltet werden.

Erfindungsgemäß kann eine weitere Verbesserung des Wirkungsgrades dadurch erzielt werden, dass in dem Direktgang ein Teil oder sämtliche Eingangskonstanten nicht in Antriebsverbindung mit den Eingangswellen stehen. Hierdurch können eine Lagerreibung, etwaige Planschverluste und die in dem Direktgang bewegte träge Masse reduziert werden. Besonders vorteilhaft ist hierbei, wenn die Eingangskonstanten eingangsseitige Zahnräder aufweisen, die Losräder auf den Eingangswellen darstellen und somit in dem Direktgang von den Eingangswellen entkoppelbar sind.

Für die Gestaltung des Getriebes für maximale Fahrgeschwindigkeiten kann es von Vorteil sein, wenn zumindest ein Overdrive-Getriebegang (Übersetzung i<1) vorgesehen ist. Ein vergrößerter Fahrkomfort ergibt sich in diesem Fall, wenn der Schaltvorgang von dem Direktgang zu dem mindestens einen Overdrive-Getriebegang (und umgekehrt) zugkraftunterbrechungsfrei möglich ist.

Gemäß einer erfindungsgemäßen Weiterbildung des lastschaltbaren Getriebes ist die Rangegruppe als Planetengetriebe ausgebildet, die sich durch einfache koaxiale Gestaltung, geringen radialen Bauraum, günstige Drehmomenten- und Drehzahlverhältnisse auszeichnet. Ein Direktgang kann für ein derartiges Planetengetriebe dadurch ausgebildet werden, dass in einem derartigen Direktgang das Planetengetriebe im Block umläuft. Ein anderer Schaltzustand des Planetengetriebes kann beispielsweise in einem gegenüber dem Gehäuse gebremsten Getriebeelement des Planetengetriebes, beispielsweise in einem gebremsten Hohlrad, bestehen.

Der Fahrkomfort des lastschaltbaren Getriebes kann erfindungsgemäß dadurch weiter erhöht werden, dass eine oberste Gruppe sequentiell lastschaltbarer Getriebegänge fünf Getriebegänge umfasst, für die damit komfortabel bei großen Geschwindigkeiten der Schaltzustand des Getriebes an die Betriebsbedingungen anpassbar ist.

Zur Reduzierung des Bauaufwandes für einzelne oder sämtliche Schaltelemente schlägt die Erfindung vor, zumindest ein Schaltelement als unsynchronisiertes Schaltelement auszubilden. In einem derartigen Fall kann eine Synchronisierung eines oder mehrerer Schaltelemente in einzelnen oder mehreren Getriebegängen über eine zentrale Synchronisiereinrichtung erfolgen, bei der es sich um eine zentrale Bremse oder ein Antriebsaggregat für Zahnräder oder Getriebewellen handeln kann.

In besonderer Ausgestaltung des lastschaltbaren erfindungsgemäßen Getriebes ist eine derartige zentrale Synchronisiereinrichtung als Vorgelegewellenbremse ausgebildet.

Vorteilhafte Weiterbildungen ergeben sich aus den Unteransprüchen, der Beschreibung und den Zeichnungen. Weitere Merkmale sind der Zeichnung, insbesondere den dargestellten Geometrien der Bauteile, den relativen Abmessungen mehrerer dargestellter Maße gleicher oder unterschiedlicher Bauteile, der relativen Anordnung der Bauteile zueinander und deren Wirkverbindungen miteinander, zu entnehmen. Die Kombination von Merkmalen unterschiedlicher in verschiedenen Figuren dargestellter Ausgestaltungen, Merkmalen unterschiedlicher Ansprüche und/oder der vorgenannten Merkmale mit Merkmalen der Ausgestaltungen des genannten Standes der Technik ist ebenfalls möglich und wird hiermit angeregt.

Ein bevorzugtes Ausführungsbeispiel der erfindungsgemäßen Vorrichtung wird nachfolgend anhand der Zeichnung näher erläutert. In der Zeichnung zeigt:
- Fig. 1: einen Räderplan eines erfindungsgemäßen last- schaltbaren Getriebes für ein Nutzfahrzeug mit 18 oder 20 Vorwärtsgängen,
- Fig. 2: den Leistungsfluss in 18 Vorwärtsgängen für das Getriebe gemäß Fig. 1,
- Fig. 3 - 12: die Abfolge der Schaltzustände der Schaltele- mente des Getriebes gemäß Fig. 1 für eine Doppelrückschaltung von einem 12. Getriebe- gang zu einem 10. Getriebegang mit anschlie- ßender sequentieller Lastschaltung von dem 10. Getriebegang in einen 11. Getriebegang,
- Fig. 13: eine alternative Ausgestaltung eines Räder- plans für ein erfindungsgemäßes lastschaltba- res Getriebe, bei dem der Leistungsfluss auf zwei im Wesentlichen übereinstimmend ausge- bildete Vorgelegewellen aufgeteilt wird,
- Fig. 14: eine alternative Ausgestaltung eines Räder- plans eines erfindungsgemäßen lastschaltbaren Getriebes mit einer Vorgelegewellenbremse zur Synchronisierung bei Schaltvorgängen und
- Fig. 15: die Leistungsflüsse für das in Fig. 1 darge- stellte Ausführungsbeispiel eines lastschalt- baren Getriebes bei Einsatz von 20 Vorwärts- Getriebegängen.

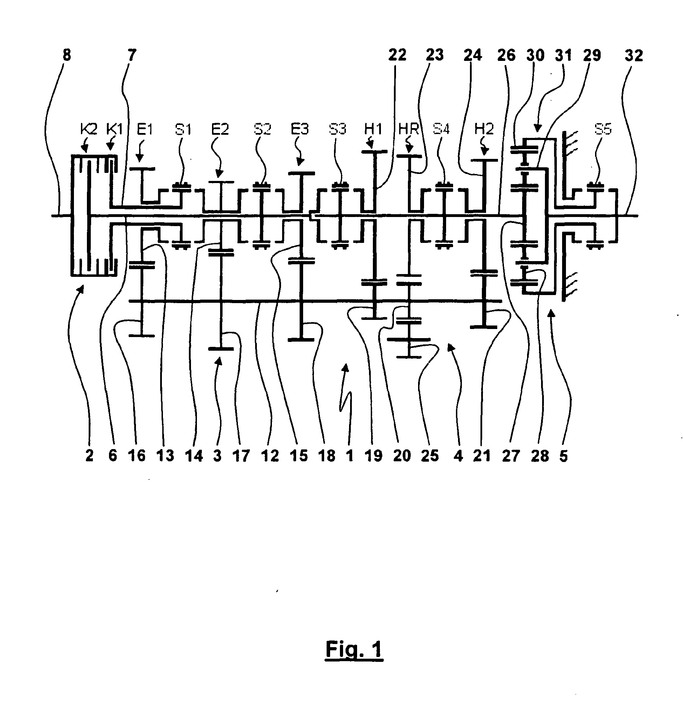

Fig. 1 zeigt ein lastschaltbares Getriebe 1 mit einer Doppelkupplung 2 mit zwei Kupplungen K1 und K2, einer Splitgruppe 3, einer Hauptgruppe 4 und einer Rangegruppe 5.

Die Splitgruppe 3 besitzt zwei Eingangswellen 6, 7, die über die Kupplungen K1, K2 selektiv oder mit Einsatz einer Überschneidungssteuerung in Antriebsverbindung mit einer Getriebeeingangswelle 8 bringbar sind. In der Splitgruppe 3 ist über Eingangskonstanten E1, E2 und E3 mit zugeordneten Zahnradebenen ein Antrieb einer Vorgelegewelle 12 mit unterschiedlichen Übersetzungen möglich. Die Eingangskonstanten E1, E2, E3 besitzen antriebsseitige Zahnräder 13 bis 15, die in ständig kämmender Verbindung mit abtriebsseitigen Zahnrädern 16 bis 18 der Eingangskonstanten E1, E2 und E3 stehen. Die Zahnräder 13 bis 15 sind als Losräder ausgeführt, wobei das Zahnrad 13 drehbar gegenüber der Eingangswelle 7 gelagert ist, während die Zahnräder 14, 15 drehbar gegenüber der Eingangswelle 6 gelagert sind. Die Eingangswelle 7 ist als Hohlwelle ausgebildet und umgibt die Eingangswelle 6 unter Zwischenschaltung einer Lagerung.

Über ein Schaltelement S1 ist die Eingangswelle 7 in einer Schaltstellung S1 (E1) drehfest mit dem Zahnrad 13 verbindbar sowie in einer Schaltstellung S1 (E2) drehfest mit dem Zahnrad 14 verbindbar, während in der dargestellten mittigen Neutralstellung über das Schaltelement S1 keine Verbindung zwischen den Zahnrädern 13, 14 und der Eingangswelle 7 geschaffen ist.

Ein Schaltelement S2 verbindet in einer Schaltstellung S2 (E2) drehfest das Zahnrad 14 mit der Eingangswelle 6 und in einer Schaltstellung S2 (E3) das Zahnrad 15 drehfest mit der Eingangswelle 6, während in der skizzierten mittigen Neutralstellung des Schaltelements S2 keine Verbindung der Zahnräder 13, 14 mit der Eingangswelle 6 über das Schaltelement S2 gegeben ist.

Im Bereich der Hauptgruppe 4 trägt die Vorgelegewelle 12 antriebsseitige Zahnräder 19, 20, 21, die ständig mit abtriebsseitigen Zahnrädern 22, 23, 24 in Verzahnungsebenen H1, HR, H2 kämmen, wobei zwischen die Zahnräder 20 und 23 ein Rückwärtsgang-Zahnrad 25 zwischengeschaltet ist. Die Zahnräder 22-24 sind jeweils als Losräder gegenüber einer Hauptwelle 26 der Hauptgruppe 4 gelagert, die wiederum über eine Pilotlagerung gegenüber der Eingangswelle 6 gelagert ist.

Mittels eines Schaltelements S3 ist die Hauptwelle 26 in einer linken Schaltstellung S3 (1) mit der Eingangswelle 6 drehfest verbindbar sowie in einer rechten Schaltstellung S3 (H1) drehfest mit dem Zahnrad 22 verbindbar, während in der skizzierten mittigen Neutralstellung das Schaltelement S3 unwirksam ist.

Ein in der skizzierten mittigen Neutralstellung unwirksames Schaltelement S4 verbindet in einer Schaltstellung S4 (HR) das Zahnrad 23 mit der Hauptwelle 26, während in einer Schaltstellung S4 (H2) eine drehfeste Verbindung zwischen Zahnrad 24 und Hauptwelle 26 geschaffen ist.

Die Rangegruppe besitzt Getriebeelemente in Form eines drehfest mit der Hauptwelle 26 verbundenen Sonnenrades 27, von Planeten 28, die über einen Steg 29 drehbar gelagert sind, sowie eines Hohlrades 30, mittels welchen auf an sich bekannte Weise ein Planetengetriebe 31 gebildet ist. Der Steg 29 ist drehfest mit einer Abtriebswelle 32 oder Getriebeausgangswelle verbunden.

Ein Schaltelement S5 ist in der dargestellten mittigen Neutralstellung wirkungslos, während dieses in einer linken Schaltstellung S5(1) das Hohlrad 30 drehfest mit dem Gehäuse verbindet oder gegenüber diesem bremst, während in einer rechten Schaltstellung S5(2) das Hohlrad 30 drehfest mit der Abtriebswelle 32 verbunden ist, so dass der Planetensatz 31 im Block umläuft.

Die folgende Tabelle 1 zeigt für die Getriebegänge 1 bis 18 sowie die Rückwärts-Getriebegänge R1 bis R6 die Kupplungs- und Schaltzustände für die Kupplungen K2, K1 und die Schaltelemente S1 bis S5, wobei mit drei Ecken die jeweils geschlossene Kupplung indiziert ist, während mit ausgefüllten Kreisen die Schaltstellung der Schaltelemente indiziert ist, die wirksam sind und mit leeren Kreisen Schaltelemente gekennzeichnet sind, die sich in einer Neutralstellung befinden.

**Tabelle 1: Schaltzustände einer Getriebevariante mit 18 (17+1) Gängen**

| **Gang** | **K2** | **K1** | **S1** | | | **S2** | | | **S3** | | | **S4** | | | **S5** | |
|---|---|---|---|---|---|---|---|---|---|---|---|---|---|---|---|---|
| | | | E1 | N | E2 | E2 | N | E3 | 1 | N | H1 | HR | N | H2 | 1 | 2 |
| **1** | | ▲ | | | ● | | ○ | | | | ● | | ○ | | ● | |
| **2** | ▲ | | | ○ | | | | ● | | | ● | | ○ | | ● | |
| **3** | | ▲ | ● | | | | ○ | | | | ● | | ○ | | ● | |
| **4** | | ▲ | | | ● | | ○ | | | ○ | | | | ● | ● | |
| **5** | ▲ | | | ○ | | | | ● | | ○ | | | | ● | ● | |
| **6** | | ▲ | ● | | | | ○ | | | ○ | | | | ● | ● | |
| **7** | ▲ | | | | | | ○ | | ● | | | | ○ | | ● | |
| **8** | | ▲ | | | ● | | | ● | ● | | | | ○ | | ● | |
| **9** | | ▲ | ● | | | | | ● | ● | | | | ○ | | ● | |
| **10** | | ▲ | | | ● | | ○ | | | | ● | | ○ | | | ● |
| **11** | ▲ | | | ○ | | | | ● | | | ● | | ○ | | | ● |
| **12** | | ▲ | ● | | | | ○ | | | | ● | | ○ | | | ● |
| **13** | | ▲ | | | ● | | ○ | | | ○ | | | | ● | | ● |
| **14** | ▲ | | | ○ | | | | ● | | ○ | | | | ● | | ● |
| **15** | | ▲ | ● | | | | ○ | | | ○ | | | | ● | | ● |
| **16** | ▲ | | | | | | ○ | | ● | | | | ○ | | | ● |
| **17** | | ▲ | | | ● | | | ● | ● | | | | ○ | | | ● |
| **(18)** | | ▲ | ● | | | | | ● | ● | | | | ○ | | | ● |
| | | | | | | | | | | | | | | | | |
| **R1** | | ▲ | | | ● | | ○ | | | ○ | | ● | | | ● | |
| **R2** | ▲ | | | ○ | | | | ● | | ○ | | ● | | | ● | |
| **R3** | | ▲ | ● | | | | ○ | | | ○ | | ● | | | ● | |
| **R4** | | ▲ | | | ● | | ○ | | | ○ | | ● | | | | ● |
| **R5** | ▲ | | | ○ | | | | ● | | ○ | | ● | | | | ● |
| **R6** | | ▲ | ● | | | | ○ | | | ○ | | ● | | | | ● |

Darüber hinaus ist Tabelle 1 durch die Zusammenfassung von Gruppen von Zeilen und durch die Trennung durch die Doppelstriche gekennzeichnet, welche Getriebegänge sequentiell und zugkraftunterbrechungsfrei schaltbar sind, nämlich Getriebegänge 1 bis 3, Getriebegänge 4 bis 8, Getriebegänge 10 bis 12, Getriebegänge 13 bis 17.

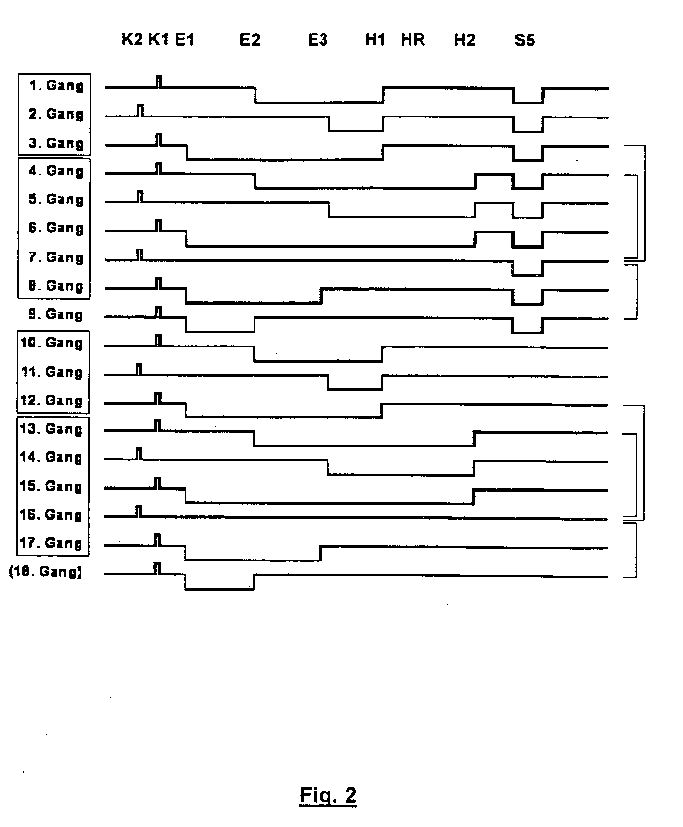

Den Leistungsfluss in den einzelnen Getriebegängen zeigt Fig. 2, aus der zu erkennen ist, dass der 16. Gang als Direktgang ausgebildet ist, in dem der Leistungsfluss über die Getriebeeingangswelle 8, Kupplung K2, Eingangswelle 6, Schaltelement S3, Hauptwelle 26 über den geblockten Planetensatz 31 zur Abtriebswelle 32 verläuft. Eine ähnliche Direktübertragung des Antriebsmomentes erfolgt in dem 7. Gang in der Splitgruppe 3 und der Hauptgruppe 4, wobei sich in diesem Fall das Schaltelement S5 in der Schaltstellung S5 (1) befindet, so dass der Planetensatz 31 eine Übersetzung i>1 herbeiführt.

Für die Getriebegänge 1 bis 3 sowie 4 bis 6 sowie 10 bis 12 sowie 13 bis 15 finden die Eingangskonstanten E2, E3, E1 in der vorgenannten Reihenfolge Einsatz, wobei in den Getriebegängen 1 bis 3 in der Hauptgruppe 4 Zahnradebene H1 Einsatz findet, in den Getriebegängen 4 bis 6 Zahnradebene H2, in Getriebegängen 10 bis 12 Zahnradebene H1 und in Getriebegängen 13 bis 15 Zahnradebene H2. In den Getriebegängen 8 und 9 sowie 17 und 18 wird über die Zahnradebenen H1, HR, H2 keine Leistungen übertragen, da eine Rückführung der Leistung im Bereich der Eingangskonstanten E2 (Getriebegänge 9, 18) und der Eingangskonstanten E3 (Getriebegänge 8, 17) erfolgt, jeweils unter Vorschaltung der Eingangskonstanten E1.

An dem rechten Rand der Fig. 2 sind mit Klammern mögliche Lastschaltungen gekennzeichnet.

Die Getriebegänge 17 und 18 bilden Overdrive-Getriebegänge mit einer Gesamtübersetzung von i<1. Zwischen den beiden Overdrive-Getriebegängen 17 und 18 kann nicht ohne Zugkraftunterbrechung geschaltet werden. Allerdings ist eine Beaufschlagung des Overdrive-Getriebeganges 18 von dem Direktgang 16 aus ohne Zugkraftunterbrechung möglich.

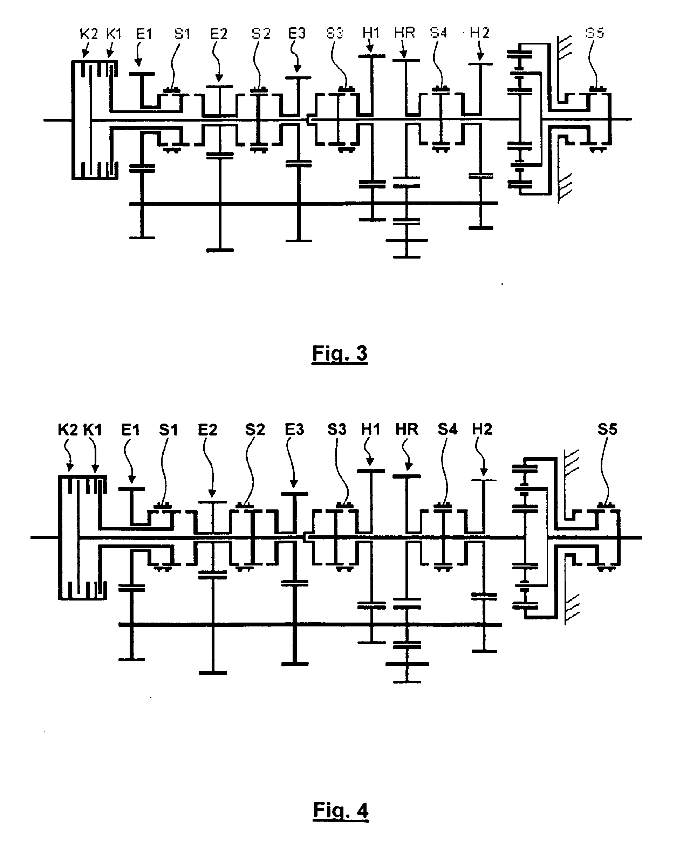

Fig. 3 zeigt das Getriebe für eine aktivierte 12. Getriebegang. In dieser verläuft der Leistungsfluss über die Kupplung K1, Schaltelement S1 in Schaltstellung S1(E1), Zahnräder 13, 16, Vorgelegewelle 12, Zahnräder 19, 22, Schaltelement S3 in Schaltstellung S3(H1) Hauptwelle 26 und infolge Schaltelement S5 in Schaltstellung S5(2) verblocktem Planetensatz 31 zur Abtriebswelle 32.

Für eine Doppelrückschaltung aus dem Getriebegang 12 zum Getriebegang 10 wird zunächst das Zahnrad 14 über Schaltelement S2, welches in die Schaltstellung S2(E2) verbracht wird, mit der Eingangswelle 6 verbunden, ohne dass die Kupplung K2 geschlossen ist, siehe Fig. 4.

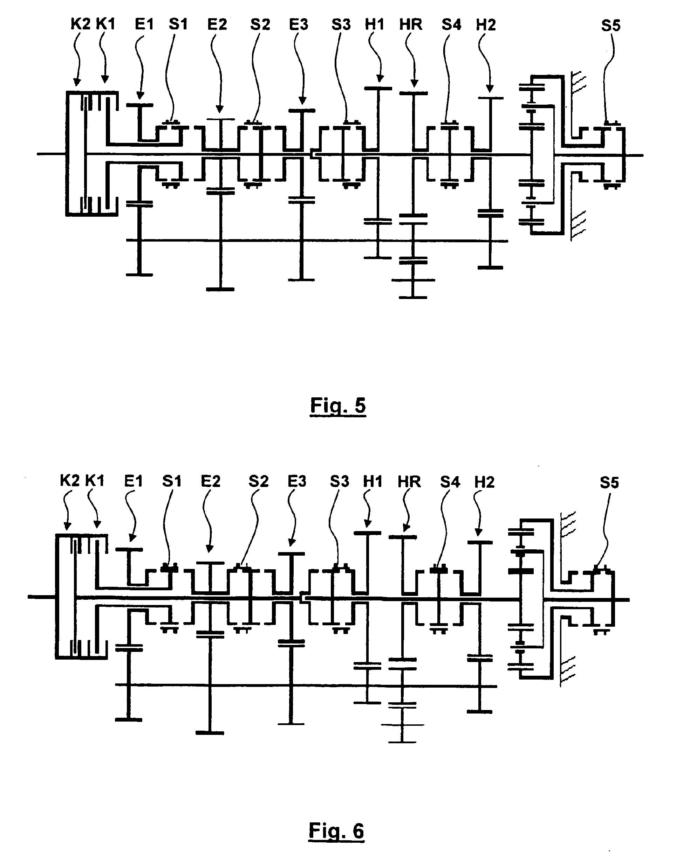

Durch geeignete Überschneidungssteuerung wird dann das Moment von der Kupplung K1 auf die Kupplung K2 übergeben, so dass der Leistungsfluss von der Getriebeeingangswelle 8 über die Kupplung K2, Schaltelement S2 in Schaltstellung S2(E2), Zahnräder 14, 17, Vorgelegewelle 12, Zahnräder 19, 22, Schaltelement S3 in Schaltstellung S3 (H1), Hauptwelle 26 und den geblockten Planetensatz 31 verläuft (Fig. 5).

Gemäß Fig. 6 wird hieran anschließend das Zahnrad 13 der Eingangskonstanten E1 von der Eingangswelle 7 entkoppelt dadurch, dass das Schaltelement S1 von der Schaltstellung S1(E1) in die Neutralstellung verbracht wird.

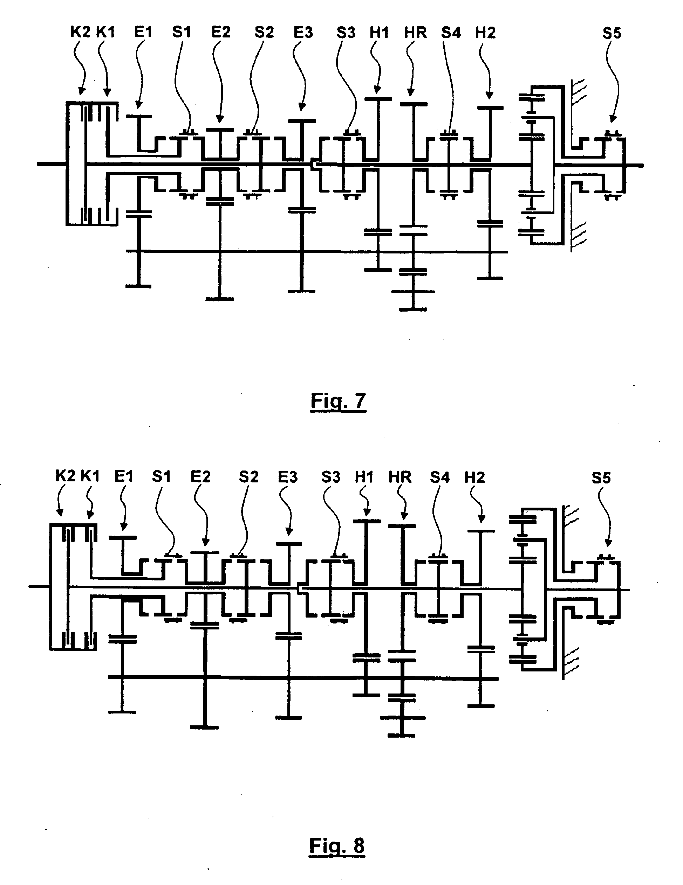

Gemäß Fig. 7 wird nun das Zahnrad 14 mit der Getriebewelle 7 dadurch gekoppelt, dass das Schaltelement S1 und die Schaltstellung S1(E2) verbracht wird.

Mittels einer geeigneten Überschneidungssteuerung wird gemäß Fig. 8 die Kupplung K1 ebenfalls geschlossen.

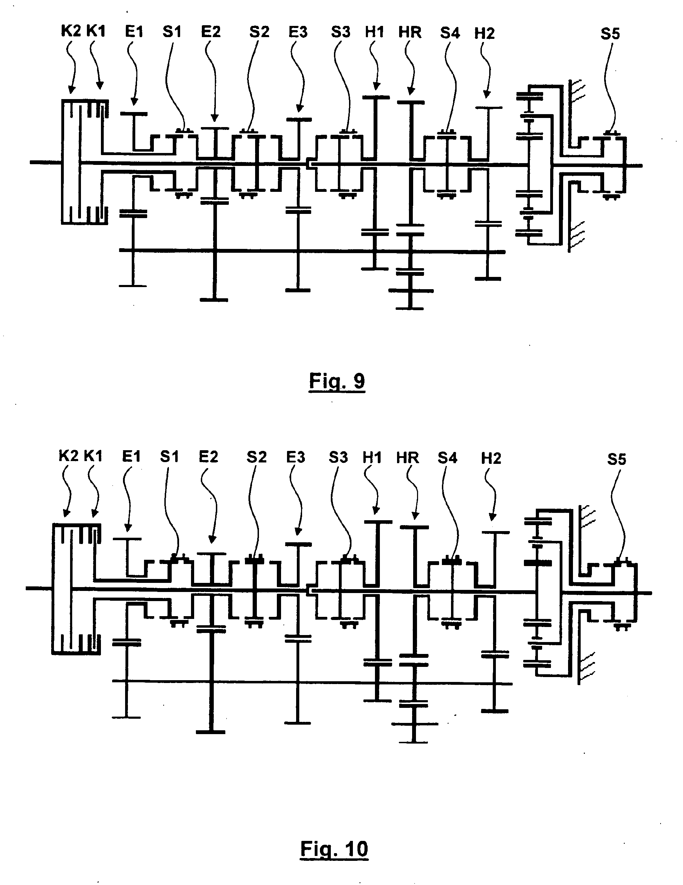

Gemäß Fig. 9 wird dann die Kupplung K2 geöffnet, so dass der Leistungsfluss von der Getriebeeingangswelle 8 über die Kupplung K1, Eingangswelle 7, Schaltelement S1, Eingangskonstante E2 mit Zahnrädern 14, 17, Vorgelegewelle 12, Zahnrad 19, 22, Schaltelement S3, Hauptwelle 26 über den geblockten Planetensatz 31 zur Abtriebswelle 32 verläuft.

Hieran anschließend wird das Zahnrad 14 von der Eingangswelle 6 dadurch entkoppelt, dass das Schaltelement S2 gemäß Fig. 10 in die Schaltstellung S2(N) verbracht wird. Hiermit ist der in Tabelle 1 für den Schaltzustand im Getriebegang 10 angegebene Schaltzustand erreicht.

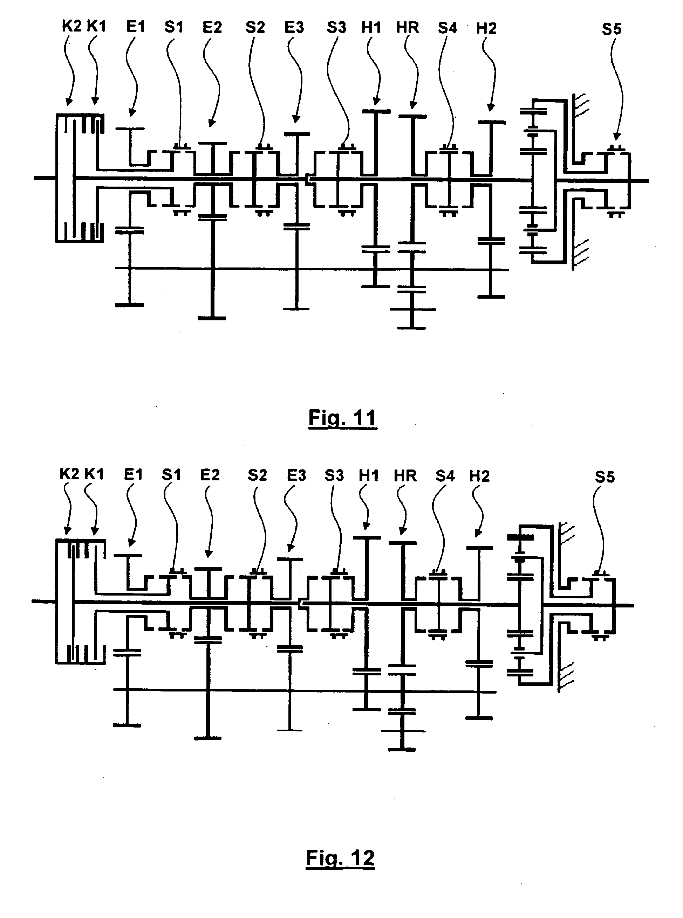

Für eine sequentielle Schaltung in den Getriebegang 11 wird gemäß Fig. 11 das Zahnrad 15 der Eingangskonstanten E3 über die Überführung des Schaltelementes S2 in die Schaltstellung S2(E3) drehfest mit der Eingangswelle 6 verbunden.

Eine Aktivierung des 11. Getriebeganges erfolgt gemäß Fig. 12 durch Übergabe des Antriebsmomentes von der Kupplung K1 auf die Kupplung K2. Der in Fig. 12 dargestellte Schaltzustand entspricht hierbei dem in Tabelle 1 für den Getriebegang 11 angegebenen Schaltzustand.

Mehrfachgangwechsel sind für das dargestellte Getriebe 1 möglich zwischen den Getriebegängen 3 und 7, 4 und 7, 7 und 9, 12 und 16, 13 und 16 sowie 16 und 18. Infolge der erfindungsgemäßen selektiven Verbindbarkeit des Zahnrades 14 sowohl mit der Eingangswelle 6 als auch mit der Eingangswelle 7 sind zusätzliche zugkraftunterbrechungsfreie Doppelschaltungen möglich, nämlich zwischen den Getriebegängen 1 und 3, 4 und 6, 10 und 12 sowie 13 und 15. Allgemein gesprochen bedeutet dies, dass eine Doppelhoch- oder Doppelrückschaltung generell jeweils zwischen zwei nicht direkt benachbarten Splitgängen mit identischer Übersetzung in der Hauptgruppe möglich ist. Die jeweils "mittlere Übersetzung" in der Splitgruppe wird dabei in der Schaltabfolge ausgelassen.

Für eine Doppelhochschaltung von dem Getriebegang 10 in den Getriebegang 12 muss ausgehend vom Getriebegang 10 das Zahnrad 14 der Eingangskonstanten E2 drehfest mit der Eingangswelle 6 verbunden werden, was in der Schaltstellung S2(E2) der Fall ist. Das Zahnrad 14 ist allerdings auch über das Schaltelement S1 in Schaltstellung S1(E2) mit der Eingangswelle 7 verbunden. In einem nächsten Schritt wird diese Verbindung gelöst, in dem durch Überführung des Schaltelementes S1 in die Stellung S1(N) das Zahnrad 14 von der Eingangswelle 7 entkoppelt wird. Hieran anschließend erfolgt eine Verbindung des Zahnrades 13 mit der Eingangswelle 7 dadurch, dass das Schaltelement S1 in die Schaltstellung S1(E1) überführt wird. Im nächsten Schritt kann das Antriebsmoment von der Kupplung K2, die mit der Eingangswelle 6 verbunden ist, auf die Kupplung K1, die mit der Eingangswelle 7 verbunden ist, übergeben werden. Der Doppelhochschaltvorgang ist abgeschlossen, sobald Kupplung K2 komplett geöffnet und Kupplung K1 komplett geschlossen ist.

Wenn in einer Fahrsituation, beispielsweise in einem unteren Getriebegang, abzusehen ist, dass bei einem Hochschalten Getriebegänge ausgelassen werden können, kann eine Schaltstrategie angewendet werden, bei der das Zahnrad 14 der Eingangskonstanten E2 von vornherein mit der Eingangswelle 6 verbunden wird, so dass der zuvor beschriebene "Wechsel" der drehfesten Verbindung von der Eingangswelle 6 auf die Eingangswelle 7 bei der Notwendigkeit der Mehrfachhochschaltung vermieden werden kann.

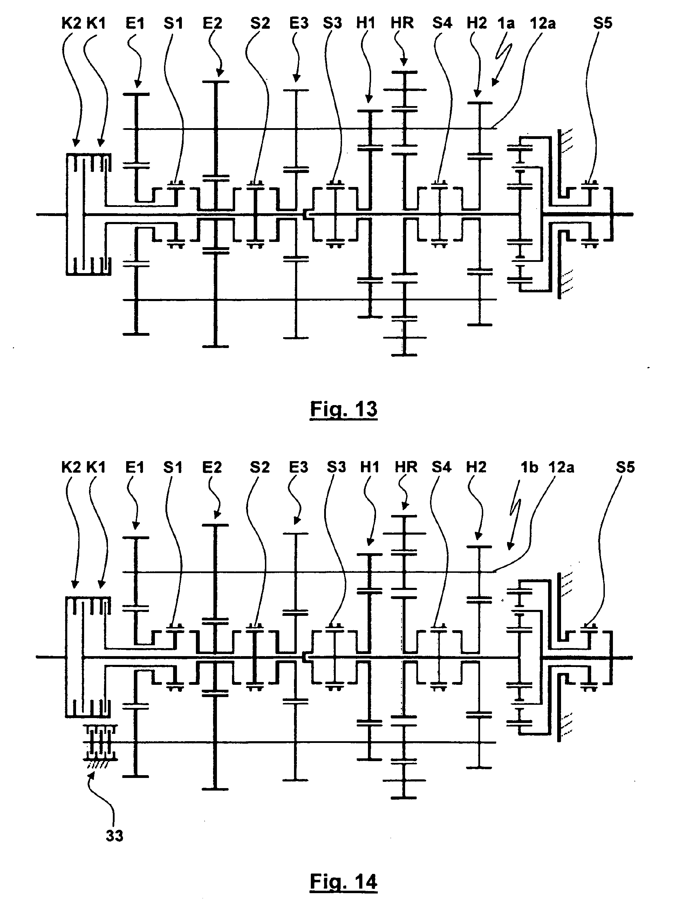

Fig. 13 zeigt eine weitere Ausgestaltung des erfindungsgemäßen Getriebes 1a, welches im Wesentlichen dem Getriebe 1 gemäß den Figuren 1 bis 12 entspricht. Allerdings ist eine zusätzliche Vorgelegewelle 12a vorgesehen, die hinsichtlich der wälzenden Verbindungen und der auf der Vorgelegewelle 12a angeordneten Zahnräder der Vorgelegewelle 12 entspricht. Hierdurch kann die zwischen Getriebeeingangswelle 8 und Abtriebswelle 32 übertragene Leistung und das Moment im Bereich der Splitgruppe 3 und der Hauptgruppe 4 auf zwei Leistungspfade aufgeteilt werden, wodurch die Belastungen der Bauelemente verkleinert ist und eine verringerte Dimensionierung, beispielsweise von Wellen, Zahnrädern und Lagern, ermöglicht ist.

Fig. 14 zeigt bei ansonsten Fig. 13 entsprechender Ausgestaltung des Getriebes 1b eine Anordnung einer Vorgelegewellenbremse 33, über die zur Synchronisierung während eines Schaltvorganges bei zumindest teilweise unsynchronisierten Schaltelementen die Geschwindigkeit der Vorgelegewelle 12 veränderbar ist.

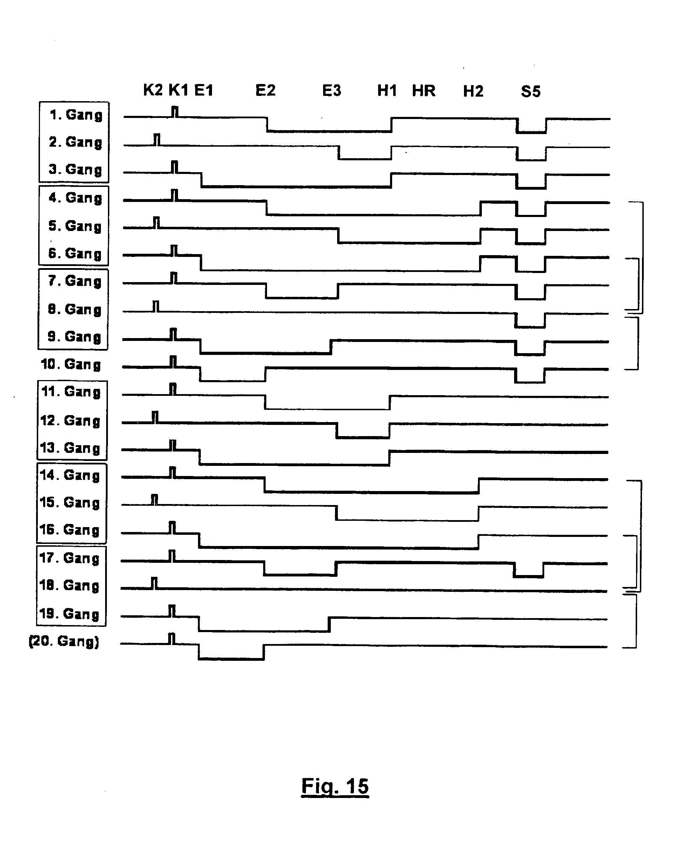

Gemäß dem in Fig. 15 dargestellten Leistungsfluss mit den in Tabelle 2 angegebenen Schaltzuständen ist für die in den Fig. 1 bis 14 dargestellten Getriebe 1, 1a, 1b auch ein Einsatz mit 20 Vorwärtsgängen möglich: In einem zusätzlichen 7. Getriebegang sowie einem zusätzlichen 17. Getriebegang kann eine Kombination der Eingangskonstanten E2 und E3 zur Bildung einer Übersetzung mit i>1 verwendet werden. Abweichend zu den Ausführungsbeispielen gemäß Fig. 1 bis 14 umfasst eine oberste Gruppe lastschaltbarer benachbarter Gänge in diesem Fall nicht mehr 5 Getriebegänge, sondern nun lediglich 3 Getriebegänge.

**Tabelle 2: Schaltzustände einer Getriebevariante mit 20 (19+1) Gängen**

| **Gang** | **K2** | **K1** | **S1** | | | **S2 S3** | | | | | | **S4** | | | **S5** | |
|---|---|---|---|---|---|---|---|---|---|---|---|---|---|---|---|---|
| | | | 1 | N | 2 | 1 | N | 2 | 1 | N | 2 | 1 | N | 2 | 1 | 2 |
| **1** | | ▲ | | | ● | | ○ | | | | ● | | ○ | | ● | |
| **2** | ▲ | | | ○ | | | | ● | | | ● | | ○ | | ● | |
| **3** | | ▲ | ● | | | | ○ | | | | ● | | ○ | | ● | |
| **4** | | ▲ | | | ● | | ○ | | | ○ | | | | ● | ● | |
| **5** | ▲ | | | ○ | | | | ● | | ○ | | | | ● | ● | |
| **6** | | ▲ | ● | | | | ○ | | | ○ | | | | ● | ● | |
| **7** | | ▲ | | | ● | ● | | | | ○ | | | ○ | | ● | |
| **8** | ▲ | | | | | | ○ | | ● | | | | ○ | | ● | |
| **9** | | ▲ | | | ● | | | ● | ● | | | | ○ | | ● | |
| **10** | | ▲ | ● | | | | | ● | ● | | | | ○ | | ● | |
| **11** | | ▲ | | | ● | | ○ | | | | ● | | ○ | | | ● |
| **12** | ▲ | | | ○ | | | | ● | | | ● | | ○ | | | ● |
| **13** | | ▲ | ● | | | | ○ | | | | ● | | ○ | | | ● |
| **14** | | ▲ | | | ● | | ○ | | | ○ | | | | ● | | ● |
| **15** | ▲ | | | ○ | | | | ● | | ○ | | | | ● | | ● |
| **16** | | ▲ | ● | | | | ○ | | | ○ | | | | ● | | ● |
| **17** | | ▲ | | | ● | ● | | | | ○ | | | ○ | | | ● |
| **18** | ▲ | | | | | | ○ | | ● | | | | ○ | | | ● |
| **19** | | ▲ | | | ● | | | ● | ● | | | | ○ | | | ● |
| **(20)** | | ▲ | ● | | | | | ● | ● | | | | ○ | | | ● |
| | | | | | | | | | | | | | | | | |
| **R1** | | ▲ | | | ● | | ○ | | | ○ | | ● | | | ● | |
| **R2** | ▲ | | | ○ | | | | ● | | ○ | | ● | | | ● | |
| **R3** | | ▲ | ● | | | | O | | | ○ | | ● | | | ● | |
| **R4** | | ▲ | | | ● | | ○ | | | ○ | | ● | | | | ● |
| **R5** | ▲ | | | ○ | | | | ● | | ○ | | ● | | | | ● |
| **R6** | | ▲ | ● | | | | ○ | | | ○ | | ● | | | | ● |

Die Eingangswellen 6, 7 sind für die dargestellten Ausführungsbeispiele verhältnismäßig lang ausgebildet, wobei infolge der Zahneingriffe der Eingangskonstanten E1, E2, E3 verhältnismäßig große Radialkräfte und hierdurch bewirkte Momente bewirkt werden können, die durch zusätzliche Lagerungen der Eingangswellen 6, 7 aufgefangen werden können. Eine weitere zusätzliche oder alternative Abhilfemöglichkeit ist durch die beschriebene Aufteilung und gegenseitige Kompensation der Kräfte und Momente durch Verwendung von zwei Vorgelegewellen 12, 12a gemäß Fig. 13 möglich.

## Patentansprüche

1. Lastschaltbares Getriebe (1) für ein Nutzfahrzeug mit einer Splitgruppe (3), einer Hauptgruppe (4) und einer Rangegruppe (5), wobei
a) die Splitgruppe (3) über zwei über eine Doppelkupplung (2) aktivierbare Eingangswellen (6, 7) verfügt, die über mehrere Eingangskonstanten (E1, E2, E3) selektiv mit derselben Vorgelegewelle (12; 12a) verbindbar sind, die bis auf einen Direktgang (Getriebegang 16) in sämtlichen Getriebegängen (Getriebegänge 1 bis 15, 17, 18) in den Leistungsfluss zwischengeschaltet ist,
b) zumindest ein Losrad (14) einer Eingangskonstanten (E2) über mindestens ein Schaltelement (S1, S2) mit beiden Eingangswellen (6, 7) drehfest verbindbar ist,
c) zur Bildung des Direktganges (Getriebegang 16) eine der beiden Eingangswellen (6) über ein Schaltelement (S3) drehfest mit einer Hauptwelle (26) der Hauptgruppe (4)verbindbar ist,
d) die Hauptwelle (26) über die Rangegruppe (5) mit der Abtriebswelle (32) verbindbar ist, wobei die Rangegruppe (5) eine Schaltstellung (S5) mit direkter Antriebsverbindung ohne Zwischenschaltung wälzender Zahnräder in den Leistungsfluss besitzt und
e) die Eingangswellen (6, 7) koaxial zu der Abtriebswelle (32) angeordnet sind.

2. Lastschaltbares Getriebe nach Anspruch 1,
**dadurch gekennzeichnet, dass**
in mindestens einem Getriebegang (Getriebegänge 9, 18) das über mindestens ein Schaltelement (S2) mit beiden Eingangswellen (6, 7) drehfest verbindbare Losrad (14) einer Eingangskonstanten (E2) eine der Vorgelegewelle (12) von einer Eingangswelle (7) zugeführte Leistung zu der anderen Eingangswelle (6) zurückführt, die über ein Schaltelement (S3) drehfest mit der Hauptwelle (26) der Hauptgruppe (4) verbunden ist.

3. Lastschaltbares Getriebe nach einem der vorhergehenden Ansprüche,
**dadurch gekennzeichnet, dass**
Gruppen von Getriebegängen (Getriebegänge 1 bis 3; 4 bis 8; 10 bis 12; 13 bis 17) sequentiell lastschaltbar sind.

4. Lastschaltbares Getriebe nach einem der vorhergehenden Ansprüche,
**dadurch gekennzeichnet, dass**
von einzelnen Getriebegängen zugkraftunterbrechungsfreie Doppelhoch- oder Doppelrückschaltungen (Getriebegänge 1 <==> 3; 4 <==> 6; 7 <==> 9; 10 <==> 12; 13 <==> 15; 16 <==> 18) möglich sind.

5. Lastschaltbares Getriebe nach einem der vorhergehenden Ansprüche,
**dadurch gekennzeichnet, dass**
von einzelnen Getriebegängen zugkraftunterbrechungsfreie Mehrfachhochschaltungen oder Mehrfachrückschaltungen (3 <==> 7; 4 <==> 7; 12 <==> 16; 13 <==> 16) möglich sind.

6. Lastschaltbares Getriebe nach einem der vorhergehenden Ansprüche,
**dadurch gekennzeichnet, dass**
nach einer zugkraftunterbrechungsfreien Doppel- oder Mehrfachhochschaltung oder Doppel- oder Mehrfachrückschaltung (12 <==> 10) in demselben Getriebegang (Getriebegang 10) eine Übergabe von einer Kupplung (K2) der Doppelkupplung (2) und der hiermit verbundenen Eingangswelle (6) auf die andere Kupplung (K1) der Doppelkupplung (2) und die hiermit verbundene Eingangswelle (7) möglich ist.

7. Lastschaltbares Getriebe nach einem der vorhergehenden Ansprüche,
**dadurch gekennzeichnet, dass**
in dem Direktgang (Getriebegang 16) die Eingangskonstanten (E1, E2, E3) nicht in Antriebsverbindung mit den Eingangswellen (6, 7) stehen.

8. Lastschaltbares Getriebe nach einem der vorhergehenden Ansprüche,
**dadurch gekennzeichnet, dass**
zumindest eine Overdrive-Getriebegang, insbesondere zwei Overdrive-Getriebegänge (Getriebegänge 17, 18), vorgesehen ist/sind und ein zugkraftunterbrechungsfreier Schaltvorgang von dem Direktgang (Getriebegang 16) zu dem Overdrive-Getriebegang oder den Overdrive-Getriebegängen (Getriebegänge 17, 18) möglich ist.

9. Lastschaltbares Getriebe nach einem der vorhergehenden Ansprüche,
**dadurch gekennzeichnet, dass**
die Splitgruppe (3) und die Hauptgruppe (4) jeweils drei Zahnradebenen (E1, E2, E3) besitzen, wodurch je nach Schaltzustand der Splitgruppe (3) und der Hauptgruppe (4) neun Teilgetriebegänge ermöglicht sind.

10. Lastschaltbares Getriebe nach einem der vorhergehenden Ansprüche,
**dadurch gekennzeichnet, dass**
die Rangegruppe (5) als Planetengetriebe (31) ausgebildet ist, welches in einem Schaltzustand (S5) im Block umläuft.

11. Lastschaltbares Getriebe nach einem der vorhergehenden Ansprüche,
**dadurch gekennzeichnet, dass**
die oberste Gruppe sequentiell lastschaltbarer Getriebegänge fünf Getriebegänge (Getriebegänge 13 bis 17) umfasst.

12. Lastschaltbares Getriebe nach einem der vorhergehenden Ansprüche,
**dadurch gekennzeichnet, dass**
zumindest ein unsynchronisiertes Schaltelement und eine zentrale Synchronisiereinrichtung vorgesehen sind.

13. Lastschaltbares Getriebe nach Anspruch 12,
**dadurch gekennzeichnet, dass**
die zentrale Synchronisiereinrichtung eine Vorgelegewellenbremse (33) ist.

14. Lastschaltbares Getriebe nach einem der vorhergehenden Ansprüche,
**dadurch gekennzeichnet, dass**
der Leistungsfluss in Getriebegängen auf zwei parallele Vorgelegewellen (12, 12a) aufgeteilt ist.

15. Lastschaltbares Getriebe nach einem der vorhergehenden Ansprüche,
**dadurch gekennzeichnet, dass**
sämtliche Schaltelemente (S1 bis S5) koaxial angeordnet sind.

16. Lastschaltbares Getriebe nach Anspruch 15,
**dadurch gekennzeichnet, dass**
sämtliche Schaltelemente (S1 bis S5), die Eingangswellen (6, 7) und die Abtriebswelle (32) koaxial angeordnet sind.

## Claims

1. Power-shift transmission (1) for a commercial vehicle, comprising a splitter group (3), a main group (4) and a range change group (5), wherein
a) the splitter group (3) is provided with two input shafts (6, 7) activated by way of a twin clutch (2) and selectively connectable via a plurality of input constants (E1, E2, E3) to the same layshaft (12; 12a) which, with the exception of a direct drive (gear 16), is interposed into the power flow in all gears (gears 1 to 15, 17, 18),
b) at least one idler gear (14) of an input constant (E2) can be non-rotatably connected to both input shafts (6, 7) via at least one shifting component (S1, S2),
c) for direct drive (gear 16), one of the two input shafts (6) is non-rotatably connectable to a main shaft (26) of the main group (4) via a shifting component (S3),
d) the main shaft (26) is connectable to the output shaft (32) via the range change group (5), the range change group (5) having a shifting position (S5) with direct drive connection without the interposition of rolling gears into the power flow, and
e) the input shafts (6, 7) are arranged coaxial with the output shaft (32).

2. Power-shift transmission according to claim 1,
**characterised in that**
in at least one gear (gears 9, 18), the idler gear (14) of an input constant (E2), which is non-rotatably connectable to the two input shafts (6, 7) via at least one shifting component (S2), returns a power supplied to the layshaft (12) by one input shaft (7) to the other input shaft (8), which is non-rotatably connected to the main shaft (26) of the main group (4) via a shifting component (S3).

3. Power-shift transmission according to any of the preceding claims,
**characterised in that**
groups of gears (gears 1 to 3; 4 to 8; 10 to 12; 13 to 18) are sequentially power-shiftable.

4. Power-shift transmission according to any of the preceding claims,
**characterised in that**
double upshifting or double downshifting (gears 1 <==> 3; 4 <==> 6; 7 <==> 9; 10 <==> 12; 13 <==> 15; 16 <==> 18) is possible from individual gears without any interruption to traction.

5. Power-shift transmission according to any of the preceding claims,
**characterised in that**
multiple upshifting or multiple downshifting (gears 3 <==> 7; 4 <==> 7; 12 <==> 16; 13 <==> 16) is possible from individual gears without any interruption to traction.

6. Power-shift transmission according to any of the preceding claims,
**characterised in that**
following a double or multiple upshift or a double or multiple downshift (gears 12 <==> 10) without any interruption to traction, a transfer is possible in the same gear (gear 10) from one clutch (K2) of the twin clutch (2) and the input shaft (6) connected thereto to the other clutch (K1) of the twin clutch (2) and the input shaft (7) connected thereto.

7. Power-shift transmission according to any of the preceding claims,
**characterised in that**
the input constants (E1, E2, E3) are not in drive connection with the input shafts (6, 7) in direct drive (gear 16).

8. Power-shift transmission according to any of the preceding claims,
**characterised in that**
at least one overdrive, in particular two overdrives (gears 17, 18) is/are provided and shifting is possible without any interruption to traction from direct drive (gear 16) to the overdrive or overdrives (gears 17, 18).

9. Power-shift transmission according to any of the preceding claims,
**characterised in that**
the splitter group (3) and the main group (4) each has three gear levels (E1, E2, E3), resulting in nine sub-gears depending on the shifting state of the splitter group (3) and the main group (4).

10. Power-shift transmission according to any of the preceding claims,
**characterised in that**
the range change group (5) is designed as a planetary transmission revolving in the block in one shifting state (S5).

11. Power-shift transmission according to any of the preceding claims,
**characterised in that**
the topmost group of sequentially shiftable gears includes five gears (gears 13 to 17).

12. Power-shift transmission according to any of the preceding claims,
**characterised in that**
at least one unsynchronised shifting component and a central synchroniser are provided.

13. Power-shift transmission according to claim 12,
**characterised in that**
the central synchroniser is a layshaft brake (33).

14. Power-shift transmission according to any of the preceding claims,
**characterised in that**
the power flow in the gears is split between two parallel layshafts (12, 12a).

15. Power-shift transmission according to any of the preceding claims,
**characterised in that**
all shifting components (S1 to S5) are arranged coaxially.

16. Power-shift transmission according to claim 15,
**characterised in that**
all shifting components (S1 to S5), the input shafts (6, 7) and the output shaft (32) are arranged coaxially.

## Revendications

1. Transmission (1) à changement de rapports sous charge pour un véhicule utilitaire comprenant un doubleur de gamme (3), une boîte principale (4) et un groupe relais (5),
a) le doubleur de gamme (3) dispose de deux arbres d'entrée (6, 7) pouvant être activés par un double embrayage (2) qui peuvent être reliés de manière sélective au moyen de plusieurs constantes d'entrée (E1, E2, E3) au même arbre intermédiaire (12, 12a) lequel est interposé jusqu'à une prise directe (rapport de boîte 16) dans l'ensemble des rapports de boîte (rapports de boîte 1 à 15, 17, 16) dans le flux de puissance,
b) au moins un pignon fou (14) d'une constante d'entrée (E2) pout être connecté de façon solidaire en rotation au moyen d'au moins un élément de commutation (S1, S2) aux deux arbres d'entrée (6, 7),
c) pour la formation de la prise directe (rapport 16x), l'un des deux arbres d'entrée (6) pout être connecté au moyen d'un élément de commutation (S3) de façon solidaire en rotation à l'arbre principal (26) de la boîte principale (4),
d) l'arbre principal (26) pout être connecté par le biais du groupe relais (5) à l'arbre d'entraînement (32), le groupe relais (5) possédant une position de commutation (S5) avec une liaison d'entraînement directe sans intercalage de roues dentées de roulement dans le flux de puissance et
e) les arbres d'entrée (6, 7) sont disposés de manière coaxiale par rapport à l'arbre d'entraînement (32).

2. Transmission à changement de rapports sous charge selon la revendication 1, **caractérisée en ce que** dans au moins un rapport de boîte (rapports de boîte 9, 18) le pignon fou (14), pouvant être connecté de façon solidaire en rotation aux deux arbres d'entrée (6, 7) par le biais d'au moins un élément de commutation (S2), d'une constante d'entrée (S2) reconduit une puissance amenée à l'arbre intermédiaire (12) par un arbre d'entrée (7) à l'autre arbre d'entrée (6) qui est connecté de façon solidaire en rotation par le biais d'un élément de commutation (S3) à l'arbre principal (26) de la boîte principale (4).

3. Transmission à changement de rapports sous charge selon l'une quelconque des revendications précédentes, **caractérisée en ce que** les groupes des rapports de boîte (rapports de boîte 1 à 3 ; 4 à 8 ; 10 à 12 ; 13 à 17) peuvent être couplables sous charge de manière séquentielle.

4. Transmission à changement de rapports sous charge selon l'une quelconque des revendications précédentes, **caractérisée en ce qu'**à partir de chaque rapport de boîte (rapports de boîte 1 <==> 3; 4 <==> 6; 7 <==> 9; 10 <==> 12; 13 <==> 15; 16 <==> 18), des doubles rétrogradages ou des doubles passages à la vitesse supérieure sont possibles sans interruption de la liaison de force de traction.

5. Transmission à changement de rapports sous charge selon l'une quelconque des revendications précédentes, **caractérisée en ce qu'**à partir de chaque rapport de boîte, des passages multiples à la vitesse supérieure ou des rétrogradages multiples (3 <==> 7; 4 <==> 7; 12 <==> 16; 13 <==> 16) sont possibles sans interruption de la liaison de force de traction.

6. Transmission à changement de rapports sous charge selon l'une quelconque des revendications précédentes, **caractérisée en ce qu'**après un double passage à la vitesse supérieure ou un passage multiple à la vitesse supérieure sans interruption de la liaison de force de traction ou un rétrogradage double ou multiple (12 <==> 10) dans le même rapport de boîte (rapport de boîte 10), une transmission d'un accouplement (K2) du double embrayage (2) et de l'arbre d'entrée (6) connecté à celui-ci à l'autre accouplement (K1) du double embrayage (2) et de l'arbre d'entrée (7) connecté à celui-ci est possible.

7. Transmission à changement de rapports sous charge selon l'une quelconque des revendications précédentes, **caractérisée en ce que** dans la prise directe (rapport de boîte 16) les constantes d'entrée (E1, E2, E3) ne se trouvent pas en liaison d'entraînement avec les arbres d'entrée (6, 7).

8. Transmission à changement de rapports sous charge selon l'une quelconque des revendications précédentes, **caractérisée en ce qu'**au moins une vitesse surmultipliée, en particulier deux vitesses surmultipliées (rapports de boîte 17, 18) est / sont prévue(s) et un processus de changement sans interruption de la force de traction de la prise directe (rapport de boîte 16) à la vitesse surmultipliée ou à des vitesses surmultipliées (rapports de boîte 17, 18) est possible.

9. Transmission à changement de rapports sous charge selon l'une quelconque des revendications précédentes, **caractérisée en ce que** le doubleur de gamme (3) et la boîte principale (4) possèdent chacun trois plans de roues dentées (E1, E2, E3), ce qui permet neuf rapports de boîte partiels en fonction de l'état de commutation du doubleur de gamme (3) et de la boîte principale (4).

10. Transmission à changement de rapports sous charge selon l'une quelconque des revendications précédentes, **caractérisée en ce que** le groupe relais (5) est conçu sous la forme d'une transmission planétaire (31) laquelle tourne dans un bloc dans un état de commutation (S5).

11. Transmission à changement de rapports sous charge selon l'une quelconque des revendications précédentes, **caractérisée en ce que** le groupe le plus élevé de rapports couplables sous charge de manière séquentielle comprend cinq rapports de boîte (rapports de boîte 13 à 17).

12. Transmission à changement de rapports sous charge selon l'une quelconque des revendications précédentes, **caractérisée en ce qu'**au moins un élément de commutation qui n'est pas synchronisé et un dispositif de synchronisation central sont prévus.

13. Transmission à changement de rapports sous charge selon la revendication 12, **caractérisée en ce que** le dispositif de synchronisation central est un frein (33) sur l'arbre secondaire.

14. Transmission à changement de rapports sous charge selon l'une quelconque des revendications précédentes, **caractérisée en ce que** le flux de puissance dans les rapports de boîte est réparti sur les deux arbres intermédiaires (12, 12a) parallèles.

15. Transmission à changement de rapports sous charge selon l'une quelconque des revendications précédentes, **caractérisée en ce que** l'ensemble des éléments de commutation (S1 à S5) est disposé de manière coaxiale.

16. Transmission à changement de rapports sous charge selon la revendication 15, **caractérisée en ce que** l'ensemble des éléments de commutation (S1 à S5), les arbres d'entrée (6, 7) et les arbres d'entraînement (32) sont disposés de manière coaxiale.
